# EUROPEAN PATENT APPLICATION

(11) **EP 1 475 898 A1**
(43) Date of publication of application: **10.11.2004**
(21) Application number: 04252576.6
(22) Date of filing: 01.05.2004
(51) Int. Cl.: H04B 1/69

(54) **Method and apparatus for ultra wideband wireless communication using channel information**

(30) Priority: 03.05.2003 KR 2003028424
(71) Applicant: Samsung Electronics Co., Ltd., Suwon-si, Gyeonggi-do (KR)
(72) Inventor: Choi, Yun-hwa, Songpa-gu, Seoul (KR)
(74) Representative: Robinson, Ian Michael

(57) **Abstract**

A method for ultra wideband (UWB) wireless communication using channel information. The method comprises the steps of extracting a first channel information (#1) including information to generate UWB signals by demodulating received UWB signals and performing channel decoding, generating UWB signals by performing channel coding and modulation according to the first channel information (#1), and transferring the generated UWB signals.

## Description

The present invention relates to a method and apparatus for ultra wideband (hereinafter referred to as "UWB") wireless communication, and more particularly, to a method and apparatus for UWB wireless communication, which reduces mutual interference between devices in a wireless domain.

Wireless communication devices have recently become popular with the rapid development of wireless communication technologies. This has brought a lot of changes in people's lifestyles. In particular, much effort has been made in research on UWB communications capable of implementing high-speed wideband wireless communications and simultaneously providing existing wireless communication services without the need for any additional frequency resources.

As for UWB communications, information is transmitted and received using short pulses (namely, wavelet). Since extremely short pulses are used, the bandwidth of UWB pulse signals in a frequency domain may be as broad as several GHz. Since the ultra wideband is used, UWB signals have power level below noise level in the frequency domain, whereby it can be used without affecting other communication devices. Meanwhile, such UWB pulse signals have very low duty cycles. Thus, communication using UWB signals is advantageous in that data transfer rate is very high, multiple accesses can be made, and interference effects due to multiple paths can be reduced.

UWB signals can be used in a variety of fields. One of the fields currently being considered is a high speed local area network (LAN) communication in the range of several meters to scores of meters. With UWB signals, it becomes possible to transfer super high definition images such as high definition digital broadcasting or digital versatile disc (DVD) with wireless streaming data between audio and video (AV) household electric devices.

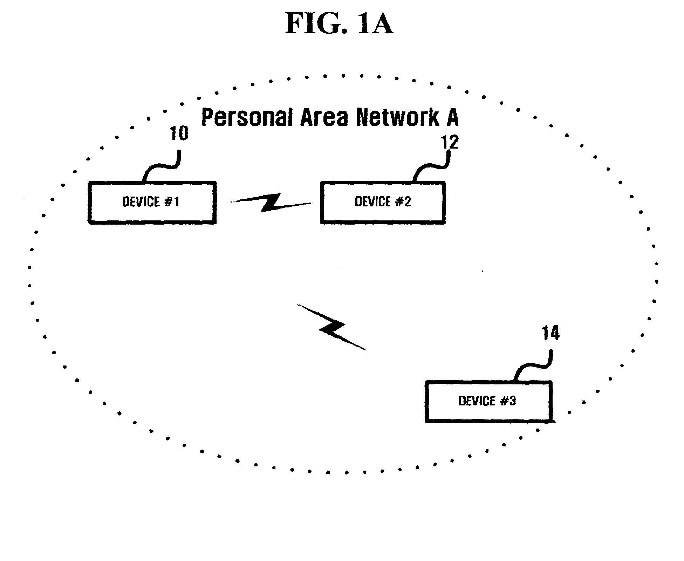

Figure 1A is a schematic diagram illustrating UWB wireless communication environment in a personal area network (hereinafter referred to as "PAN").

PAN A comprises three devices 10, 12 and 14, which may be a high definition television set (HDTV) or a DVD and the like. Data streaming may be performed between Device #1 10 and Device #2 12. Also, data streaming may be performed between Device #1 10 and Device #3 14. Not only can data streaming between Device #1 and Device #2 be performed, but simultaneous data streaming between Device #1 and Device #2, and Device #1 and Device #3 may be performed. Where two data streams are simultaneously transferred, one stream becomes noise to the other device in view of the frequency domain. As shown in Figure 1A, the distance between Device #1 10 and Device #3 14 is greater than the distance between Device #1 10 and Device #2 12. In this situation, a near-far problem may occur as in CDMA communication. Namely, where the strength of power to perform data streaming between close devices and that to perform data streaming between distant devices are the same, more power than necessary would be used for close transmission and unnecessary excessive interference signals may exist for the other device. In data transfer between devices in a network, a specific device may function as a coordinator so as to coordinate the transfer of data between the devices. However, if wireless domains of two or more PANs cause interference, such coordination cannot be expected.

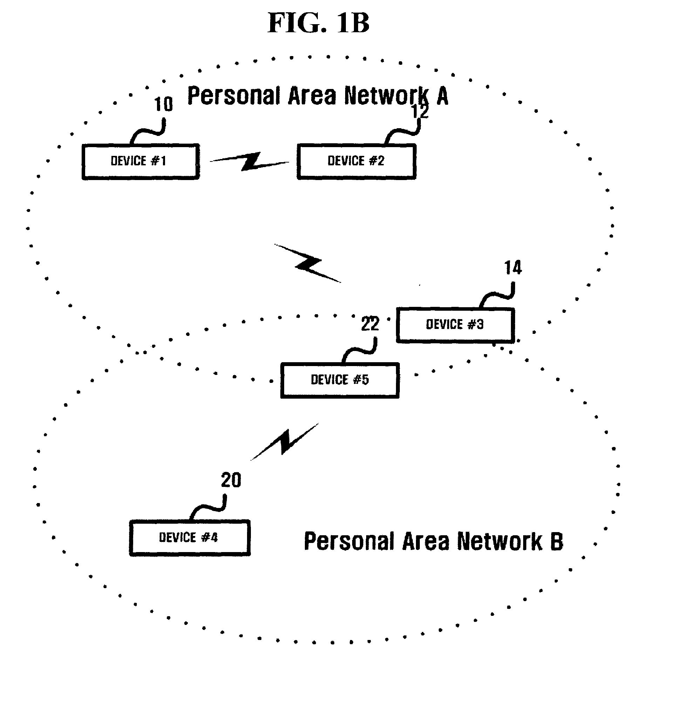

Figure 1B is a diagram illustrating mutual influence by two PANs in a wireless domain.

PAN A comprises three devices 10, 12 and 14 and PAN B comprises two devices 20 and 22. Respective devices mutually perform wireless data streaming. At this time, Device #3 14 of PAN A and Device #5 22 of PAN B are positioned so that interference due to data streaming by one, exists for another. When Device #5 performs data streaming with Device #4 20, Device #5 may receive interference due to streaming data received and transferred between Device #3 14 and Device #1 10. As described, communication between near devices may deteriorate the wireless channel environment.

To avoid the situation described above, devices have to transfer data with minimum power in transferring and receiving data under the limitation that the rate of error is, to some degree, guaranteed, if possible. Where there exists a large amount of data streaming in a large number of wireless channels, controlling interference only by adjusting power may be insufficient. If so, it is necessary to change the transfer rate of data.

The present invention is conceived to address the above-described problem.

According to the present invention there is provided an apparatus and method as set forth in the appended claims. Preferred features of the invention will be apparent from the dependent claims, and the description which follows.

The present invention provides a method and apparatus for UWB wireless communication according to a channel situation by allowing data to use UWB wireless communication channel information. That is, channel information is obtained from a signal received at a receiving unit and then supplied to a transmitting unit, thereby allowing the transmitting unit to change a data transmitting method according to a state of the UWB channel.

According to an aspect of the present invention, there is provided a method for ultra wideband (UWB) wireless communication using channel information, comprising the steps of extracting a first channel information including information from received UWB signals by demodulating and channel decoding the received UWB signals, generating UWB signals by performing channel coding and modulation according to the first channel information, and transferring the generated UWB signals.

The generated UWB signals may further include a second channel information, the second channel information may be obtained from SNR of the received UWB signals, and the second channel information may be determined according to a bit error rate of the received UWB signals.

A transmission power of the generated UWB signals may be determined by use of the first channel information, the channel coding rate of the generated UWB signals may be determined by use of the first channel information, an order of modulation of the generated UWB signals may be determined by use of the first channel information, and an interval between pulses of the generated UWB signals may be determined by use of the first channel information.

According to another aspect of the present invention, there is provided an apparatus for UWB wireless communication, comprising a channel encoder performing channel coding by adding redundant bits to data and channel information, a modulation unit generating UWB signals by modulating channel encoded data and channel information by use of the predetermined modulation mode, an RF module receiving and transmitting the generated UWB signals, a demodulation unit demodulating the received UWB signals, a channel decoder extracting channel information and data by performing channel decoding of the demodulated UWB signals, and a control unit controlling the channel encoder, the modulation unit and the RF module by use of the channel information.

The control unit may determine transmission power of the UWB signals to be transmitted to the RF module from the received channel information, channel coding rate of the channel encoder based on the received channel information, modulation order of the modulation unit by use of the received channel information, and interval between pulses of the UWB signals generated by the modulation unit by use of the received channel information.

The apparatus control unit may generate channel information to be included in the UWB signals generated based on the received UWB signals.

For a better understanding of the invention, and to show how embodiments of the same may be carried into effect, reference will now be made, by way of example, to the accompanying diagrammatic drawings in which:
Figure 1A is a schematic diagram illustrating UWB wireless communication environment in which a personal area network exists;
Figure 1B is a diagram illustrating mutual interference UWB wireless communication environment wherein two PANS exist;
Figure 2 is a block diagram of an apparatus for UWB wireless communication according to one embodiment of the present invention;
Figure 3 is a flow chart showing UWB wireless communication process according to one embodiment of the present invention; and
Figure 4 is a diagram showing a frame structure of data transmitted according to one embodiment of the present invention.

Hereinafter, the UWB communication based on a device will be described in detail according to the present invention in detail with reference to the accompanying drawings.

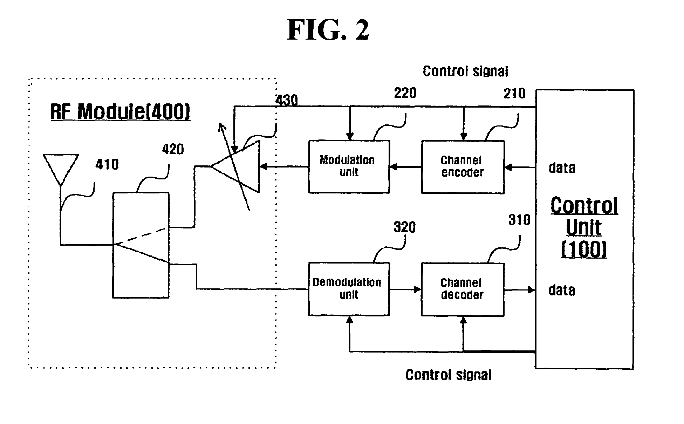

Figure 2 is a block diagram of an apparatus for UWB wireless communication according to one embodiment of the present invention.

The apparatus for UWB wireless communication shown in Figure 2 roughly comprises a transmission module, a reception module and a control unit 100.

The transmission module comprises a channel encoder 210 performing a channel coding of data to generate a bitstream, a modulation unit 220 modulating the bitstream generated in the channel encoder 210 into UWB signals, and an RF module 400 transmitting the modulated UWB signals in a wireless manner.

The reception module comprises an RF module 400 receiving the UWB signals wirelessly transmitted, a demodulation unit 320 demodulating the UWB signals received by the RF module 400 to generate a bitstream, and a channel decoder 310 reproducing data from the bitstream.

A control unit 100 generates control signals for the transmission module and the reception module to allow the UWB wireless communication apparatus to be operated adaptively to the channel situation.

A transmission process will be described. To remedy one or more bit errors generated in the course of transmitting data and to transmit channel information obtained through a predetermined mode through an UWB channel, channel coding of the data is performed by the addition of proper redundant bits thereto. The channel coding is performed by a channel encoder 210, which performs channel coding according to a predetermined channel coding rate. The channel coding rate is defined as a percentage of information bits to information bits including redundant bits. Thus, where the channel coding rate is one (1), it means that there are no redundant bits. The less the channel coding rate is, the higher the percentage of redundant bits increases, and thus, the likelihood of remedying bit errors generated in the wireless channel environment increases.

The channel encoded bitstream is modulated into UWB signals by the modulation unit 220. The UWB signals may be produced by use of 2-phase modulation mode such as BPSK (binary phase shift keying), 4-phase modulation mode such as QPSK (quadrature phase shift keying) or multiple phase modulation mode, or a pulse position modulation mode; otherwise, they may be modulated in a combination of the above-described methods. The amount of information indicated by a pulse varies depending upon various orders of modulation. For example, the 2-phase modulation can represent 1 bit, the 4-phase modulation can represent 2 bits, and the 8-phase modulation can represent 3 bits. One bit can be represented even by use of the pulse position modulation mode, and 2 bits can be represented as 1 bit in combination of the pulse position modulation mode and the 2-phase modulation mode. Moreover, there are several modes to include information in a pulse. Hereinbelow, an order of modulation refers to the amount of information (the bit number) to be included in a pulse. Where the order of modulation is high, much information can be transferred; but in this case, there is a high probability that bit errors are generated in the wireless channel. Accordingly, a proper trade off is needed between them. For example, where data is modulated in 64QAM (quadrature amplitude modulation) mode, 6-bit data can be transferred at a time, but this poses a higher probability of causing bit errors than in BPSK transferring 1-bit data.

Since UWB signals use very short cycles, they can transfer many pulses per unit time. Where there is a small interval in time between one pulse and the next pulse (hereinafter referred to as "inter-wavelet space"), a large amount of information can be transferred; but this causes a problem because the level of power in the band is elevated. This means that the level of signals interfering with the other device's communication increases, resulting in a deterioration of the whole wireless channel environment. Accordingly, it is necessary to adjust the interval between pulses as appropriate.

Modulated UWB signals are transferred to other devices through the RF module 400. For this purpose, they first pass through an amplifier 430. The amplifier 430 functions to amplify or decrease the UWB signals so that they have proper intensity. For example, when the channel is in a bad situation because devices are distantly separated, the rate of amplification should increase: when the channel is in a good situation, the rate of amplification should decrease. The UWB signals passing through the amplifier 430 are transferred to a wireless channel through an antenna 410 when a switch 420 is closed.

A reception process will be described. UWB signals transferred through a wireless channel are received through the RF module 400. The UWB signals received through the antenna 410 are transferred to the demodulation unit 320 through the switch 420. The demodulation unit 320 demodulates the transferred UWB signals in the same mode as in the modulation mode to generate a bitstream. The demodulated bitstream is decoded into data and channel information through the channel decoder 310 in an opposite manner to the channel coding process.

The control unit 100 determines a channel coding rate of a channel encoder 210, the order of modulation of the modulation unit 220, an interval between pulses, and an amplification rate of the amplifier 430, with the use of channel information included in received signals, and controls the channel encoder 210, the modulation unit 220 and the amplifier 430. Meanwhile, the control unit 100 generates channel information based on the received UWB signals and the generated channel information is transmitted together when data is transmitted. According to the above-described embodiment, the UWB wireless communication apparatus may be constructed with hardware or software.

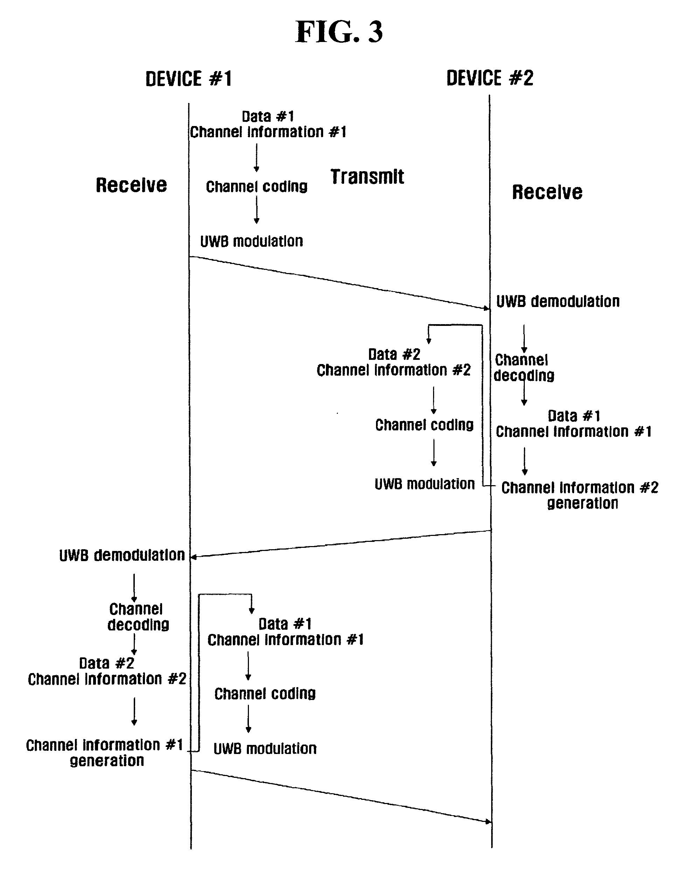

Figure 3 is a flow chart showing a UWB wireless communication process according to one embodiment of the present invention.

In this figure, Data #1 indicates information to be transferred to Device #2 and Data #2 indicates information to be transferred to Device #1 by Device #2. Channel Information #1 indicates the channel information generated by Device #1, which is involved in a processes of channel coding and UWB modulation by Device #2. Channel Information #2 indicates the channel information generated by Device #2, involved in a processes of channel coding and UWB modulation by Device #1.

Device #1 first performs a channel coding of Data #1 to be transferred to Device #2, together with channel information #1. Since Data #1 is transferred to Device #2 by Device #1, the channel coding can be performed with the use of the predetermined method in this case. For example, a bitstream can be generated with 1/4 channel coding rate. In addition, the channel information #1 can have the value predetermined in advance. The channel encoded bitstream is modulated into UWB signals: the order of modulation and intervals between pulses can be determined in any method predetermined in advance. The UWB signals are amplified with the initial amplification rate predetermined in advance and then transferred to a wireless channel.

When the UWB signals transferred to the wireless channel are received by Device #2, Device #2 initially demodulates the UWB signals with the predetermined method. The demodulated bitstream is decoded into Data #1 and Channel Information #1. In the meantime, Device #2 generates Channel Information #2 based on the received UWB signals. There may be several kinds of methods to generate channel information. For example, channel information may be determined based on power intensity of received UWB signals, or signal to noise ratio (hereinafter referred to as "SNR") may be used. Bit error may be determined by use of a redundant bit inserted in the channel coding process. Alternatively, channel information may be identified with an error bit generated by generating a test bit in the course of data transfer.

Channel Information #2 is transferred when Device #2 transfers Data #2 to Device #1. Prior to the transfer, the channel coding rate is determined based on the Channel Information #1 and then the channel coding is performed. The channel encoded bitstream is modulated into UWB signals by selecting a UWB modulation mode based on Channel Information #1 and amplifies them appropriately based on the Channel Information #1 to then transfer the UWB signals to a wireless channel.

Device #1 receives the UWB signals transferred to the wireless channel and demodulates them. At this time, the modulation order is demodulated based on Channel Information #1 previously transferred by Device #1. The demodulated bitstream is decoded into Data #2 and Channel Information #2. Meanwhile, Device #1 generates Channel Information #1 needed for a transfer process to Device #2 based on the received UWB signals, performs a channel coding according to the generated Channel Information #2 and Data #1 to be transferred, based on the Channel Information #2 transferred from the received UWB signals and then modulates them into UWB signals to thereby transfer them to a wireless channel.

In the same mode, Device #2 extracts Data #1 and Channel Information #1 based on Channel Information #2 transferred by Device #2 during the reception process and uses the extracted Channel Information #1 during the transfer process.

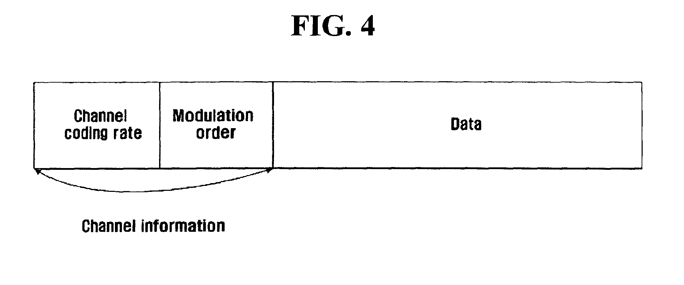

Figure 4 is a diagram showing a frame structure of data transmitted according to one embodiment of the present invention.

Device #1 can transfer data to be transferred through an UWB signal in a unit of frame, and a frame is classified into channel information and data. The channel information is generated by use of UWB signals received by Device #1. The generated channel information is used both in the transfer process of Device #2 and in the reception process for Device #1 to reproduce data from signals received by Device #2. In Figure 4, it is shown that channel information comprises a channel coding rate and a modulation order. A rate of power amplification or intervals between pulses may also be included in the channel information. A frame shown in Figure 4 does not contain information to identify a device, e.g., a MAC address, but such information may also be included.

As described above, according to the present invention, a transfer method adaptive to the channel environment in a wireless channel to which UWB signals are transferred can be selected, thereby minimizing interference between other devices and increasing reliability in communication.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for ultra wideband (UWB) wireless communication using channel information, comprising:
extracting first channel information (#1) including information to generate UWB signals, by demodulating received UWB signals into demodulated UWB signals and channel decoding of the demodulated UWB signals;
generating UWB signals by channel coding and modulating according to the first channel information (#1) as generated UWB signals; and
transferring the generated UWB signals.

2. The method as claimed in claim 1, wherein the generated UWB signals further include second channel information (#2).

3. The method as claimed in claim 2, wherein the second channel information (#2) is obtained from a signal-to-noise ratio (SNR) of the received UWB signals.

4. The method as claimed in claim 2 or 3, wherein the second channel information (#2) is determined according to a bit error rate of the received UWB signals.

5. The method as claimed in any preceding claim, wherein a transmission power of the generated UWB signals is determined by using the first channel information (#1).

6. The method as claimed in any preceding claim, wherein the channel coding rate of the generated UWB signals is determined by using the first channel information (#1).

7. The method as claimed in any preceding claim, wherein an order of modulation of the generated UWB signals is determined by using the first channel information (#1).

8. The method as claimed in any preceding claim, wherein an interval between pulses of the generated UWB signals is determined by the first channel information (#1).

9. An apparatus for ultra wideband (UWB) wireless communication, comprising:
a channel encoder (210) performing channel coding by adding redundant bits to first data and first channel information (#1);
a modulation unit (220) generating first UWB signals by modulating channel encoded data and first channel information (#1) by using a predetermined modulation mode;
a first RF module (400) transmitting the first UWB signals and receiving second UWB signals;
a demodulation unit (320) demodulating the second UWB signals into demodulated UWB signals;
a channel decoder (310) extracting second channel information (#2) and second data by channel decoding the demodulated UWB signals; and
a control unit (100) controlling the channel encoder (210), the modulation unit (220) and the RF module (400) by using the second channel information (#2).

10. The apparatus as claimed in claim 9, wherein the control unit (100) determines a transmission power of the first UWB signals to be transmitted to a second RF module from the second channel information (#2).

11. The apparatus as claimed in claim 9 or 10, wherein the control unit (100) determines a channel coding rate of the channel encoder (210) based on the second channel information (#2).

12. The apparatus as claimed in claim 9, 10 or 11, wherein the control unit (100) determines modulation order of the modulation unit (220) based on the second channel information (#2).

13. The apparatus as claimed in any of claims 9 to 12, wherein the control unit (100) determines interval between pulses of the first UWB signals generated by the modulation unit (220) based on the second channel information (#2).

14. The apparatus as claimed in any of claims 9 to 13, wherein the control unit (100) generates first channel information (#1) to be included in the second UWB signals generated based on the second UWB signals.
